Europäisches Patentamt

European Patent Office

Office européen des brevets

(19)

(11) EP 0 917 136 A1

(12) EUROPEAN PATENT APPLICATION

(43) Date of publication:
19.05.1999 Bulletin 1999/20

(51) Int. Cl.$^6$: G11B 7/095

(21) Application number: 98108116.9

(22) Date of filing: 05.05.1998

(84) Designated Contracting States:
AT BE CH CY DE DK ES FI FR GB GR IE IT LI LU
MC NL PT SE
Designated Extension States:
AL LT LV MK RO SI

(30) Priority: 13.11.1997 JP 312334/97

(71) Applicant: FUJITSU LIMITED
Kawasaki-shi, Kanagawa 211-8588 (JP)

(72) Inventors:
• Morimoto, Yasuaki,
c/o Fujitsu Limited
Kawasaki-shi, Kanagawa 211-8588 (JP)
• Nishimoto, Hideki,
c/o Fujitsu Limited
Kawasaki-shi, Kanagawa 211-8588 (JP)

(74) Representative:
Seeger, Wolfgang, Dipl.-Phys. et al
SEEGER & SEEGER
Patentanwälte & European Patent Attorneys
Georg-Hager-Strasse 40
81369 München (DE)

(54) Optical information storage apparatus

(57) An optical information storage apparatus is provided with a light source (1) emitting a beam, a beam splitter (2), having a first surface on a side of the light source and a second surface on a side opposite to the first side, reflecting the beam from the light source transmitted through the first surface by the second surface to irradiate a recording surface of a recording medium, and a detection part (11, 11A, 11B) for detecting a surface fluctuation of the recording medium by detecting a beam reflected by the recording surface of the recording medium and transmitted through the beam splitter.

FIG. 4

## Description

### BACKGROUND OF THE INVENTION

The present invention generally relates to optical information storage apparatuses, and more particularly to an optical information storage apparatus which optically records information on a recording medium and/or optical reproduces information from the recording medium.

Optical information storage apparatuses include apparatuses which record and/or reproduce information to and/or from an optical recording medium such as an optical disk typified by a CD-ROM or the like, and apparatuses which record and/or reproduce information to and/or from a magneto-optic recording medium such as a magneto-optic disk. With respect to these optical information storage apparatuses, there are demands to improve the storage capacity of the recording medium by further improving the information recording density of the recording medium, and various techniques have been proposed to satisfy such demands.

As a method of increasing the information recording density of the recording medium, there is a proposed method which reduces the wavelength of a laser beam irradiated on the recording medium via an objective lens, so as to set a numerical aperture of the objective lens to a large value, thereby reducing a spot of the light beam formed on a recording surface of the recording medium. This proposed method is already reduced to practice in digital video disk (DVD)-ROM (DVD-ROM, hereinafter simply referred to as a "disk" for the sake of convenience).

However, when the numerical aperture of the objective lens is set to a large value, the information recording and reproducing characteristic is greatly affected by an inclination (hereinafter referred to as a tilt) of the recording surface of the disk with respect to the irradiated laser beam. Hence, the disk is conventionally made thin so as to suppress the undesirable effects of the above described tilt on the information recording and reproducing characteristic.

But when the disk is made thin, the rigidity of the disk itself deteriorates, and there was a problem in that a large focusing error and/or a large tracking error are generated due to a warp of the disk itself and a surface axial runout of the recording surface when the disk is rotated. If a large focusing error and/or a large tracking error are generated, it may become impossible to correctly record information on the disk and/or correctly reproduce information from the disk.

Conventionally, there is a proposed method which uses a master disk on a disk unit and measures deviation amounts such as the warp and surface axial runout of the master disk. When assembling the disk unit, the inclination of the objective lens is adjusted so as to minimize an average amount of tilt of this master disk. But according to this method, the inclination of the objective lens is fixedly adjusted so as to minimize the average amount of tilt with respect to the master disk, and the inclination of the objective lens is not always adjusted to an optimum value with respect to each of the actual disks which are used. In other words, if the actual disk that is used has a warp and surface axial runout which are unpredictably and greatly different from those of the master disk, a large focusing error and/or a large tracking error are generated even though the inclination of the objective lens is adjusted. In such a case, there was a problem in that, even though the inclination of the objective lens is adjusted, it is impossible to correctly record information on the disk and/or correctly reproduce information from the disk.

### SUMMARY OF THE INVENTION

Accordingly, it is a general object of the present invention to provide a novel and useful optical information storage apparatus in which the problems described above are eliminated.

Another and more specific object of the present invention is to provide an optical information storage apparatus which can detect an amount of tilt of a recording medium that is used, and automatically correct the amount of tilt of the recording medium based on the detected amount of tilt.

Still another object of the present invention is to provide an optical information storage apparatus comprising a light source emitting a beam, a beam splitter, having a first surface on a side of the light source and a second surface on a side opposite to the first side, reflecting the beam from the light source transmitted through the first surface by the second surface to irradiate a recording surface of a recording medium, and detection means for detecting a surface axial runout of the recording medium by detecting a beam reflected by the recording surface of the recording medium and transmitted through the beam splitter. According to the optical information storage apparatus of the present invention, because the mount of tilt of the recording medium used can be detected, it is possible to automatically correct the amount of tilt of the recording medium based on the detected amount of tilt.

The beam splitter may further have a reflecting layer provided on the second surface and having a constant reflectivity regardless of a polarization direction of the beam.

In addition, the beam splitter may comprise a semitransparent mirror.

Furthermore, the first and second surfaces of the beam splitter may be non-parallel to each other.

Moreover, the first surface of the beam splitter may comprise a polarization beam splitter.

In these cases, it is possible to detect the amount of tilt of the recording medium used by use of a structure having a relatively simple construction.

The optical information storage apparatus may further comprise a Wollaston prism provided between the beam splitter and the detection means.

In addition, the Wollaston prism may separate the beam reflected by the recording surface of the recording medium and transmitted through the beam splitter into three beams, and the Wollaston prism may be arranged so that separating directions of the three beams are perpendicular to straight lines along which the beams reflected by the first and second surfaces of the beam splitter form an image on the detection means.

In these cases, it is possible to detect a focusing error based on the output of the detection means.

The optical information storage apparatus may further comprise an optical system, including an objective lens, irradiating the beam from the light source reflected by the beam splitter and stopped down to a diffraction limit on the recording surface of the recording medium.

In this case, it is possible to improve the information recording density of the recording medium because the optical system irradiates the beam from the light source and reflected by the beam splitter onto the recording surface of the recording medium by stopping down the beam to the diffraction limit.

The optical information storage apparatus may further comprise control means for driving the objective lens based on an output of the detection means to control a position of the objective lens.

In this case, it is possible to automatically correct the amount of tilt by controlling the position of the objective lens.

On the other hand, the optical information storage apparatus may further comprise control means for driving the recording medium based on an output of the detection means to control a surface axial runout of the recording medium.

In this case, it is possible to automatically correct the amount of tilt by controlling the position of the recording medium.

Other objects and further features of the present invention may be apparent from the following detailed description when read in conjunction with the accompanying drawings.

BRIEF DESCRIPTION OF THE DRAWINGS

FIG.1 is a plane view showing the general construction of a first embodiment of an optical information storage apparatus according to the present invention;
FIG.2 is a diagram showing the general construction of a detector;
FIG.3 is a diagram for explaining image formations on a disk by a main beam and a reflected sub beam;
FIG.4 is a plane view showing paths of the main beam and the reflected sub beam in more detail;
FIG.5 is a plane view showing the general construction of a second embodiment of the optical information storage apparatus according to the present invention;
FIG.6 is a plane view showing the general construction of a third embodiment of the optical information storage apparatus according to the present invention;
FIG.7 is a diagram showing the general construction of a detector;
FIG.8 is a plane view showing the general construction of a fourth embodiment of the optical information storage apparatus according to the present invention;
FIG.9 is a diagram showing the general construction of a detector;
FIG.10 is a plane view showing the general construction of a fifth embodiment of the optical information storage apparatus according to the present invention;
FIG.11 is a diagram showing the general construction of a detector;
FIG.12 is a plane view showing an embodiment of a tilt correction mechanism;
FIG.13 is a side view in cross section showing the tilt correction mechanism shown in FIG.12;
FIG.14 is a plane view showing an important part of an optical head part shown in FIGS.12 and 13;
FIG.15 is a system block diagram showing the construction of a circuit which corrects an amount of tilt by tilting the disk; and
FIG.16 is a system block diagram showing the construction of a circuit which corrects the amount of tilt by tilting an objective lens.

DESCRIPTION OF THE PREFERRED EMBODIMENTS

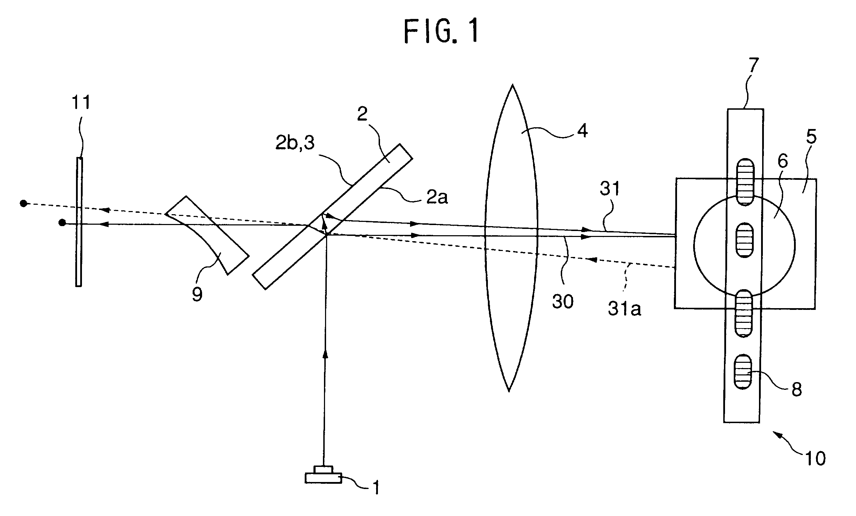

FIG.1 is a plane view showing the general construction of a first embodiment of an optical information storage apparatus according to the present invention. In this embodiment, the present invention is applied to a compact disk (CD) unit which uses a CD as a recording medium.

In FIG.1, a bundle of rays emitted from a semiconductor laser 1 which is provided as a light source is reflected by a plate-shaped beam splitter 2 which is arranged obliquely with respect to an optical axis of an optical system. A polarizing layer is provided on a first surface 2a of this plate-shaped beam splitter 2, and this first surface 2a is provided on the side of the light source. When transmittances with respect to a p-polarized light component and a s-polarized light component are respectively denoted by Tp and Ts and reflectances with respect to the p-polarized light component and the s-polarized light component are respectively denoted by Rp and Rs, the polarizing layer has a polarization characteristic such that Tp, Ts, Rp and Rs are set to satisfy Tp:Tp=80:20 and Ts:Rs=20:80, for example. In addition, a reflecting layer 3 is provided on a second surface 2b of the plate-shaped beam splitter 2, and this second surface 2b is provided on a side opposite to the light source and the first surface 2a. When a transmittance and a reflectivity of the reflecting layer 3 are respectively denoted by T and R, the reflecting layer 3 has a reflection characteristic such that T and R are set to satisfy T:R=95:5, for example, regardless of the direction of polarization. In this embodiment, the first surface 2a and the second surface 2b of the plate-shaped beam splitter 2 are parallel to each other. Of course, the plate-shaped beam splitter 2 may be made of a semitransparent mirror.

A bundle of rays (hereinafter referred to as a main beam) 30 which is reflected by the first surface 2a of the plate-shaped beam splitter 2 is converted into parallel rays by a collimator lens 4, and is reflected in a direction perpendicular to the paper by a mirror 5. The main beam 30 reflected by the mirror 5 is stopped down to a diffraction limit by an objective lens 6, and is irradiated on a recording surface of a disk 10. More particularly, the main beam 30 which is stopped down to the diffraction limit irradiates a land or a groove which forms a track 7, and magnetic domains 8 are recorded on the track 7 or the magnetic domains 8 are reproduced from the track 7.

The main beam 30 which is reflected by the recording surface of the disk 10 again passes through the collimator lens 4 and reaches the plate-shaped beam splitter 2 as a converging light, thereby being transmitted through the plate-shaped beam splitter 2 depending on the polarization characteristic described above. The bundle of rays transmitted through the plate-shaped beam splitter 2 generates astigmatism and coma aberration due to the oblique arrangement of the plate-shaped beam splitter 2 with respect to the optical axis. However, the coma aberration is eliminated by a cylindrical lens 9 which has a concave surface on one side thereof and is arranged on the side of the second surface 2b of the plate-shaped beam splitter 2. The main beam 30 which is obtained via the cylindrical lens 9 and has the astigmatism is irradiated on a detector 11 for detecting a RF signal and servo signals.

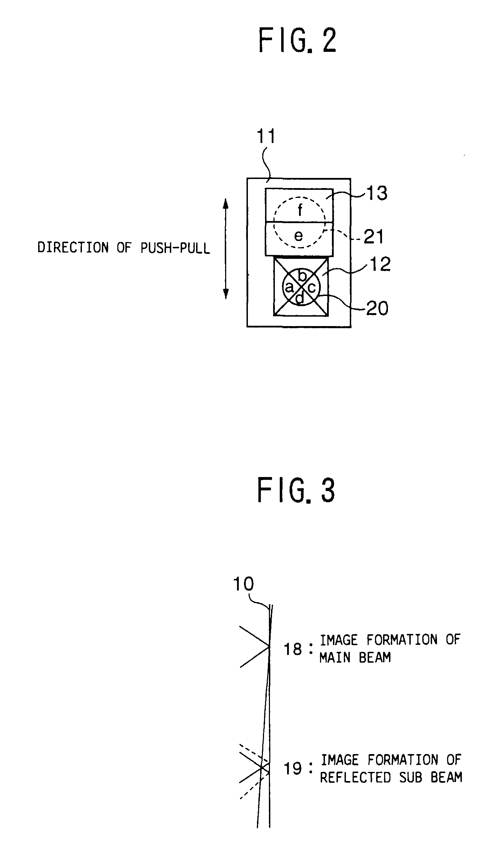

FIG.2 is a diagram showing the general construction of the detector 11. As shown in FIG.2, the detector 11 generally includes a 4-part photodetector 12 and a 2-part photodetector 13. The 4-part photodetector 12 has a known construction made up of 4 detector parts $\underline{a}$ through $\underline{d}$, and is provided to detect the RF signal and the servo signals. When outputs of these 4 detector parts $\underline{a}$ through $\underline{d}$ are respectively denoted by $\underline{a}$ through $\underline{d}$, a focusing error signal which is one of the servo signals can be obtained from (a+c)-(b+d). In addition, the RF signal can be obtained from

(a+b+c+d). Furthermore, a tracking error signal which is the other of the servo signals can be obtained from a push-pull signal (b-d), since ±1st order diffracted lights are generated by a diffraction phenomenon at the land or the groove when the main beam 30 is reflected by the recording surface of the disk 10. On the other hand, the 2-part photodetector 13 has a known construction made up of 2 detector parts $\underline{e}$ and $\underline{f}$, and is provided to detect an amount of tilt as will be described later.

Out of the bundle of rays emitted from the semiconductor laser 1, a bundle of rays (hereinafter referred to as a reflected sub beam) 31 which is transmitted through the first surface 2a of the plate-shaped beam splitter 2 and is reflected by the second surface 2b, is again transmitted through the first surface 2a and is transmitted through the collimator lens 4 similarly to the main beam 30 described above. This bundle of rays, namely, the reflected sub beam 31, does not become incident perpendicularly to the collimator lens 4. Hence, an image formation 19 which is formed on the disk 10 after the reflected sub beam 31 is reflected by the mirror 5 and is transmitted through the objective lens 6 is separated from an image formation 18 which is formed on the disk 10 by the main beam 30, as shown in FIG.3. In addition, as shown in FIG.3, the image formation 19 of the reflected sub beam 31 is blurred compared to the image formation 18 of the main beam 30. However, since the amount of light of the reflected sub beam 31 is small compared to that of the main beam 30, the recording and reproduction of the data or the like is essentially unaffected even when the reflected sub beam 31 is irradiated on the disk 10. The reflected sub beam 31 is also reflected by the disk 10 and is imaged in a vicinity of the detector 11 via a path which is indicated by a broken line 31a in FIG.1 and is similar to that of the main beam 30, but the reflected sub beam 31 is imaged at an image formation point different from that of the main beam 30.

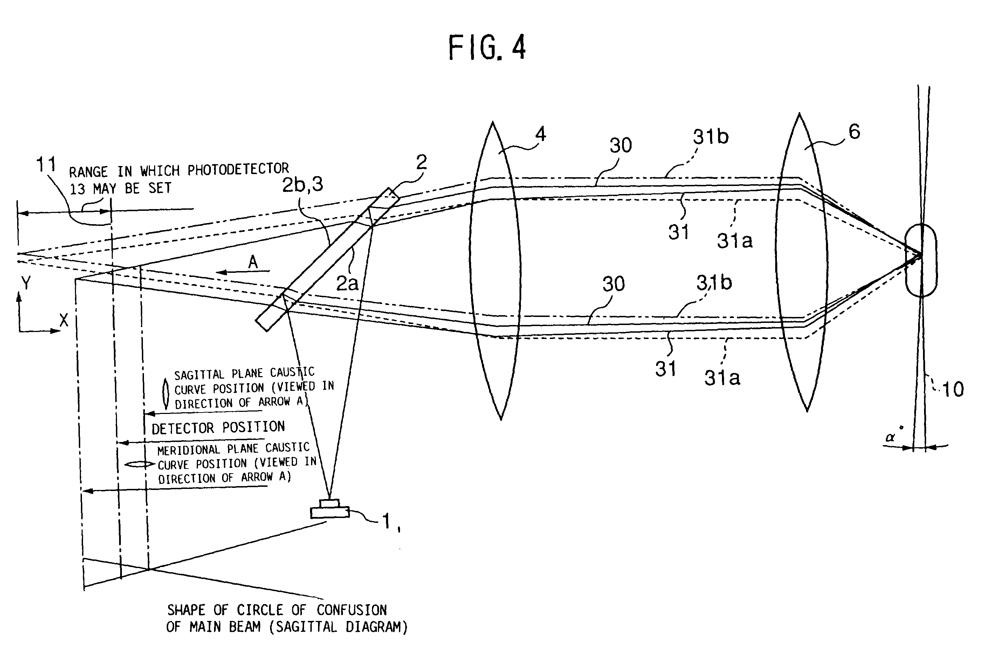

FIG.4 is a plane view showing the paths of the main beam 30 and the reflected sub beam 31 in more detail. In FIG.4, those parts which are the same as those corresponding parts in FIG.1 are designated by the same reference numerals, and a description thereof will be omitted. In FIG.4, the illustration of the mirror 5 and the cylindrical lens 9 is omitted for the sake of convenience, and the recording surface of the disk 10 is illustrated as being perpendicular to the paper. In addition, the reflected sub beam 31 reflected by the disk 10 is indicated by the broken line 31a, and the reflected sub beam 31 reflected by the disk 10 when a tilt exists is indicated by a two-dot chain line 31b.

The main beam 30 is irradiated on and reflected by the recording surface of the disk 10, and the astigmatism is generated when the main beam 30 is thereafter again transmitted through the plate-shaped beam splitter 2. In FIG.4, the position of a caustic curve differs between a plane (meridional plane) parallel to the paper surface and a plane (sagittal plane) which is perpendicular to the meridional plane. Hence, in this embodiment, the detector 11 is arranged at an intermediate position of the respective caustic curves of the meridional plane and the sagittal plane, in a direction along the optical axis (direction X). At the detector 11 which is arranged at this intermediate position, an image formation 21 of the reflected sub beam 31 indicated by the broken line in FIG.2 is offset in a direction Y in FIG.4, and becomes large compared to an image formation 20 of the main beam 30 indicated by a solid line in FIG.2. The 2-part photodetector 13 of the detector 11 is arranged at a position so that the image formation 21 of the reflected sub beam 31 can be received.

For example, if it is assumed that the disk 10 has an inclination angle $\alpha$, the image formation 21 of the reflected sub beam 31 on the detector 11 is further offset in the direction Y. Accordingly, if outputs of the detector parts $\underline{e}$ and $\underline{f}$ of the 2-part photodetector 13 are respectively denoted by $\underline{e}$ and $\underline{f}$, the inclination of the disk 10, that is, an amount of tilt, can be obtained from a difference (e-f) of the output photocurrents $\underline{e}$ and $\underline{f}$ of the detector parts $\underline{e}$ and $\underline{f}$.

In this embodiment, the 2-part photodetector 13 is arranged on the same plane as the 4-part photodetector 12. However, the 2-part photodetector 13 may be arranged on a plane different from the plane on which the 4-part photodetector 12 is provided, as long as the 2-part photodetector 13 does not interfere with the main beam 30 and the detecting operation of the 4-part photodetector 12. In addition, it is not essential to provide the 2-part photodetector 13 and the 4-part photodetector 12 on a single detector 11, and the 2-part photodetector 13 and the 4-part photodetector 12 may of course be provided independently of each other.

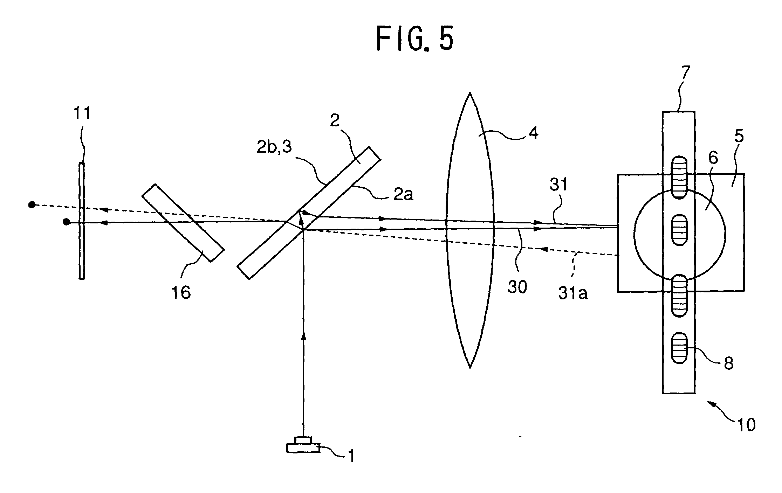

FIG.5 is a plane view showing the general construction of a second embodiment of the optical information storage apparatus according to the present invention. In FIG.5, those parts which are the same as those corresponding parts in FIG.1 are designated by the same reference numerals, and a description thereof will be omitted. In this embodiment, the present invention is also applied to a CD unit which uses a CD as a recording medium.

In this embodiment, a transmission plate 16 is provided in place of the cylindrical lens 9 shown in FIG.1. This transmission plate 16 is arranged at an inclination angle of 90° with respect to the plate-shaped beam splitter 2.

According to this embodiment, it is possible to obtain effects similar to those obtainable by the first embodiment described above.

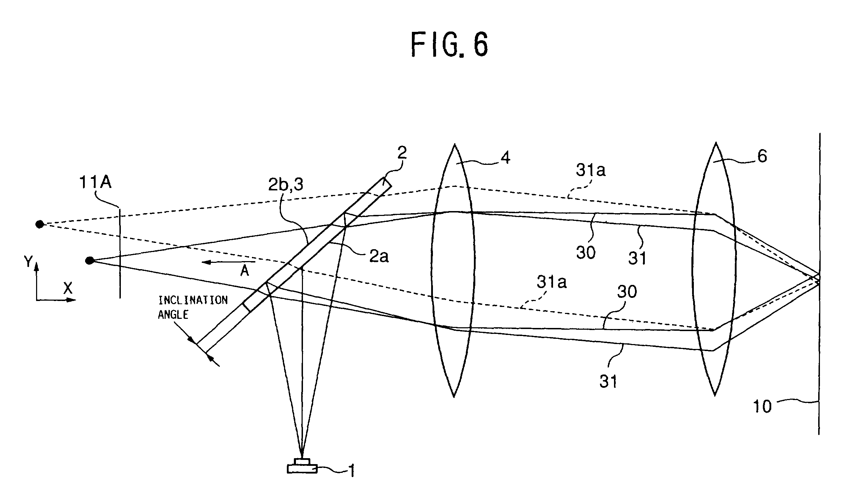

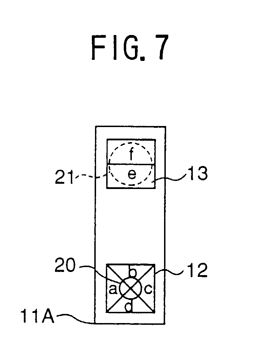

FIG.6 is a plane view showing the general construction of a third embodiment of the optical information storage apparatus according to the present invention. In FIG.6, those parts which are the same as those corresponding parts in FIG.4 are designated by the same reference numerals, and a description thereof will be omitted. In addition, FIG.7 is a diagram showing the general construction of a detector 11A. In FIG.7, those parts which are the same as those corresponding parts in FIG.2 are designated by the same reference numerals, and a description thereof will be omitted. In this embodiment, the present invention is also applied to a CD unit which uses a CD as a recording medium.

In this embodiment, the second surface 2b of the plate-shaped beam splitter 2 is formed with an inclination with respect to the first surface 2a. In other words, the first surface 2a and the second surface 2b of the plate-shaped beam splitter 2 are non-parallel to each other. For this reason, compared to the first embodiment described above, the image formation 21 of the reflected sub beam 31 formed on the detector 11A is greatly separated from the image formation 20 of the main beam 30 as shown in FIG.7. As a result, it is possible to positively prevent the effects of the reflected sub beam 31 on the 4-part photodetector 12 by arranging the 4-part photodetector 12 and the 2-part photodetector 13 at mutually separated positions as shown in FIG.7, so that outputs with reduced noise are obtained from the 4-part photodetector 12 and the 2-part photodetector 13. Therefore, it is possible to further improve the accuracy of the signals which are obtained based on the outputs of the detector 11A, namely, the servo signals, the RF signal and a signal which indicates the amount of tilt.

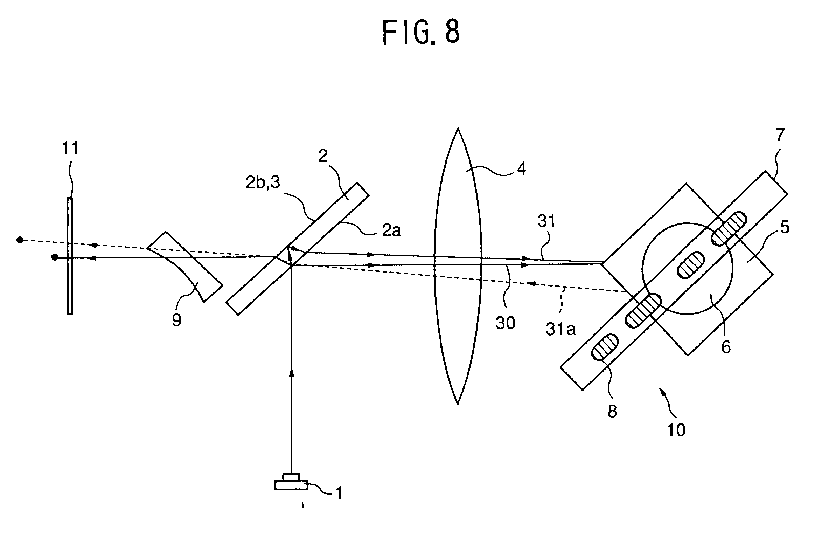

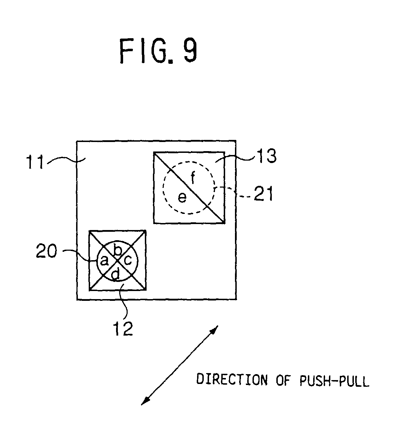

FIG.8 is a plane view showing the general construction of a fourth embodiment of the optical information storage apparatus according to the present invention. In FIG.8, those parts which are the same as those corresponding parts in FIG.1 are designated by the same reference numerals, and a description thereof will be omitted. In addition, FIG.9 is a diagram showing the general construction of the photodetector 11. In FIG.9, those parts which are the same as those corresponding parts in FIG.2 are designated by the same reference numerals, and a description thereof will be omitted. In this embodiment, the present invention is also applied to a CD unit which uses a CD as a recording medium.

In this embodiment, the recording track 7 on the disk 10 is inclined by 45° with respect to the case shown in FIG.1. For this reason, a direction of the push-pull signal in this embodiment becomes parallel and perpendicular to 2 division lines (dark lines) of the 4-part photodetector 12 of the detector 11, as shown in FIG.9. Accordingly, it is possible to suppress the mixing of the push-pull signal into the focusing error signal as noise, so that the accuracy of the focusing error signal is further improved. As may be seen by comparing FIG.9 and FIG.2, the direction of the push-pull signal in FIG.9 is inclined by 45° with respect to the direction of the push-pull signal in FIG.2.

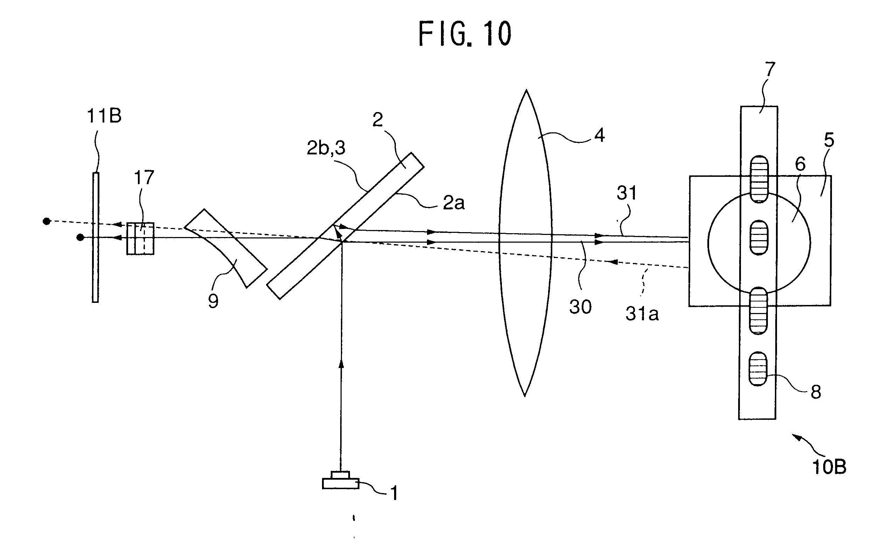

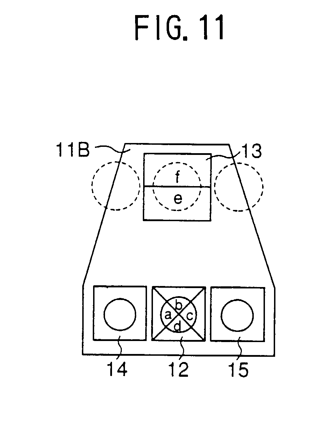

FIG.10 is a plane view showing the general construction of a fifth embodiment of the optical information storage apparatus according to the present invention. In FIG.10, those parts which are the same as those corresponding parts in FIG.1 are designated by the same reference numerals, and a description thereof will be omitted. In addition, FIG.11 is a diagram showing the general construction of 1 photodetector 11B. In FIG.11, those parts which are the same as those corresponding parts in FIG.2 are designated by the same reference numerals, and a description thereof will be omitted. In this embodiment, the present invention is applied to a magneto-optic disk unit which uses a magneto-optic disk as a recording medium.

In this embodiment, a 3-beam Wollaston prism 17 is arranged between the cylindrical lens 9 and the detector 11B along the direction of the optical axis. This Wollaston prism 17 is made up of two parallelepiped or cube shaped crystal blocks which are connected to each other within a plane where the two crystals form an angle with respect to the light incident surface. Since the Wollaston prism 17 is adjusted to an infinite focal point, the two blocks may be bonded and fixed after the adjustment. Further, in addition to the 4-part photodetector 12 and the 2-part photodetector 13, the detector 11B has photodetectors 14 and 15 which are arranged on both sides of the 4-part photodetector 12 as shown in FIG.11.

The bundle of rays reflected by the recording surface of a magneto-optic disk 10B and obtained via the cylindrical lens 9 is transmitted through the Wollaston prism 17 and separated into a total of 3 bundle of rays (light beams). The 3 bundle of rays (light beams) include 2 bundle of rays which have mutually perpendicular planes of polarization and propagate in mutually separated directions, and 1 bundle of rays in which components of these 2 bundle of rays coexist. The 2 bundle of rays which have mutually perpendicular planes of polarization and propagate in mutually separated directions respectively are irradiated on the photodetectors 14 and 15 of the detector 11B. In the case of the magneto-optic disk 10B, the information is read by utilizing the change in the polarizing angle of the reflected light on the magneto-optic disk 10B, and thus, a magneto-optic signal is obtained from a difference between photocurrents output from the photodetectors 14 and 15. On the other hand, the 1 bundle of rays in which components of these 2 bundle of rays coexist is irradiated on the 4-part photodetector 12 of the detector 11B, and the focusing error signal is obtained from the outputs _a_ through _d_ of the 4-part photodetector 12.

The separating direction in which the bundle of rays is separated by the Wollaston prism 17, that is, the direction in which the photodetectors 14, 12 and 15 are arranged, is perpendicular to the direction in which the image formation of the main beam 30 and the reflected sub beam 31 takes place on the detector 11B, that is, the direction in which the photodetectors 12 and 13 are arranged. For this reason, the 3 light beams which are obtained when the main beam 30 is separated by the Wollaston prism 17 and the 3 light beams which are obtained when the reflected sub beam 31 is separated by the Wollaston prism 17 will not interfere with each other. Hence, it is possible to obtain the servo signals, the RF signal and the signal which indicates the amount of tilt, which are highly accurate, based on the outputs of the detector 11B.

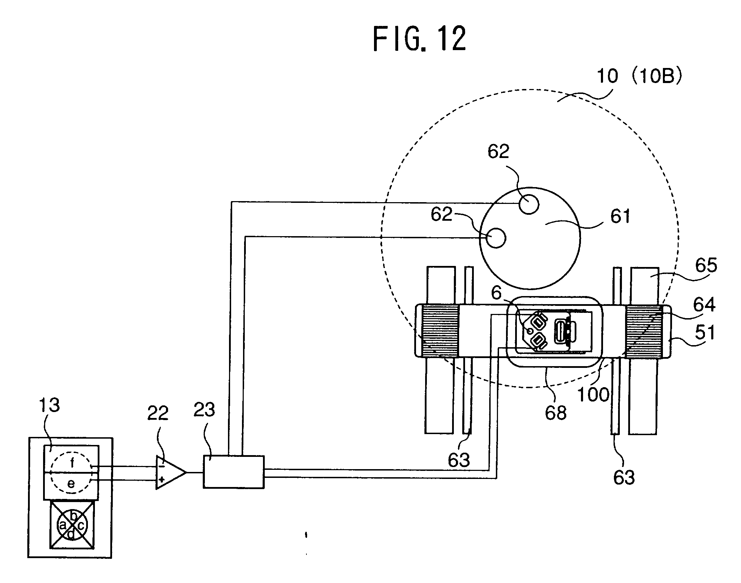

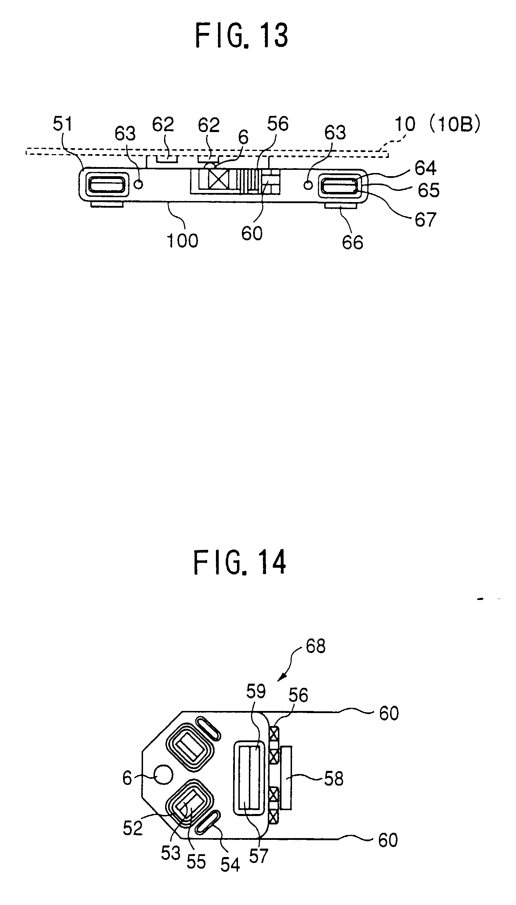

Next, a description will be given of a tilt correction mechanism for correcting the amount of tilt based on the outputs of the detector 11, 11A or 11B in each of the embodiments described above, by referring to FIGS.12 through 14. FIG.12 is a plane view showing an embodiment of the tilt correction mechanism, and the detector 11 (or 11A or 11B) and a circuit for processing the outputs of the detector 11 (or 11A or 11B) are also shown in FIG.12 for the sake of convenience. FIG.13 is a side view in cross section showing the tilt correction mechanism shown in FIG.12. In addition, FIG.14 is a plane view showing an important part of an optical head part shown in FIGS.12 and 13.

In FIGS.12 and 13, the disk 10 (or 10B) is rotated by a spindle motor 61. The spindle motor 61 is provided with 2 piezoelectric elements 62 which are arranged at positions separated by 90° relative to a center of rotation. Each of the piezoelectric elements 62 is displaced in a direction perpendicular to the paper surface in FIG.12 when a voltage is applied thereto, thereby displacing the disk 10 (or 10B) up and down in FIG.13. Accordingly, by controlling the voltages applied to the 2 piezoelectric elements 62, it is possible to tilt the disk 10 (or 10B) and correct the amount of tilt. The outputs of the 2-part photodetector 13 of the detector 11 (or 11A or 11B) are supplied to a circuit 23 via a differential amplifier 22. It is possible to tilt the disk 10 (or 10B) and correct the amount of tilt by controlling the voltages applied to the 2 piezoelectric elements 62 by the circuit 23 based on an output of the differential amplifier 22.

As shown in FIGS.12 through 14, an optical head part 100 is guided by a pair of guide rails 63 and is roughly driven in a radial direction of the disk 10 (or 10B) by a carriage 51. A driving force used to roughly drive the optical head part 100 is obtained by a magnetic circuit which is formed by carriage coils 64, magnets 67, and back yokes 65 and 66. In addition, a driving force used to finely drive the optical head part 100 to a target track on the disk 10 (or 10B) is obtained by a tracking magnetic circuit which is formed by tracking coils 56, magnets 59, and back yokes 57 and 58. Furthermore, a focusing magnetic circuit drives the objective lens 6 up and down in FIG.13 in order to adjust a focal position of the bundle of rays irradiated on the target track on the disk 10 (or 10B). This focusing magnetic circuit is formed by focusing coils 52, magnets 55, and back yokes 53 and 54.

An actuator 68 which includes the objective lens 6, the tracking magnetic circuit and the focusing magnetic circuit is resiliently supported on the carriage 51 by a pair of support springs 60. The pair of focusing coils 52 and an associated pair of magnetic circuits which form the focusing magnetic circuit are arranged so that one corresponding pair of corresponding focusing coil 52 and magnetic circuit and the other corresponding pair of focusing coil 52 and magnetic circuit are inclined by 90° to each other about the objective lens 6. Hence, it is possible to tilt the objective lens 6 by controlling currents applied to the focusing coils 52. Accordingly, by supplying the outputs of the 2-part photodetector 13 of the detector 11 (or 11A or 11B9 to the circuit 23 via the differential amplifier 22 and controlling the currents applied to the 2 focusing coils 52 by the circuit 23 based on the output of the differential amplifier 22, it is possible to control the objective lens 6, that is, to control a focus control system, so as to correct the amount of tilt.

When correcting the amount of tilt, it is possible to carry out only one of a step of correcting the amount of tilt by tilting the disk 10 (or 10B) and a step of correcting the amount of tilt by tilting the objective lens 6 (focus control system) so as to become parallel to the disk 10 (or 10B) or, to carry out both of these steps at the same time.

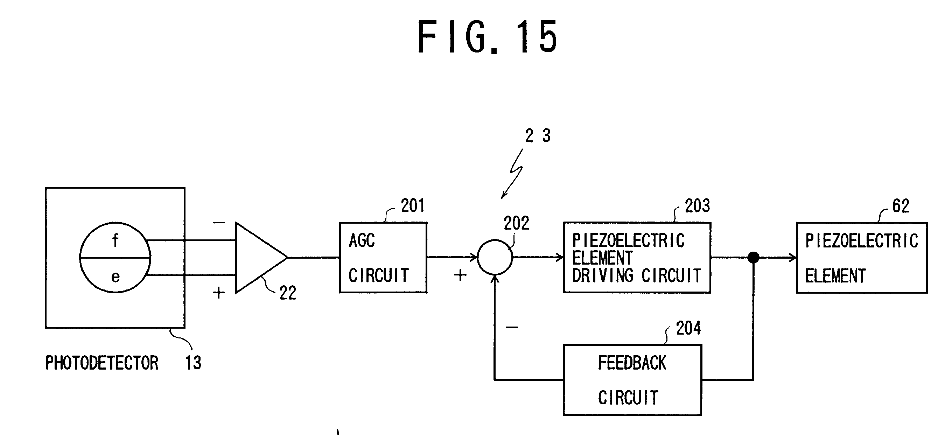

FIG.15 is a system block diagram showing the construction of the circuit 23 for a case where the amount of tilt is corrected by tilting the disk 10 (or 10B). In FIG.15, the circuit 23 includes an automatic gain control (AGC) circuit 201, a subtracting circuit 202, a piezoelectric element driving circuit 203, and a feedback circuit 204. The difference between the outputs of the detector parts e and f of the 2-part photodetector 13 is obtained by the differential amplifier 22, and the output of the differential amplifier 22 is supplied to the piezoelectric element driving circuit 203 via the AGC circuit 201 and the subtracting circuit 202. The piezoelectric element driving circuit 203 corrects the amount of tilt by applying to the piezoelectric element 62 a correction signal voltage which is proportional to the amount of tilt detected by the differential amplifier 22. In addition, the correction signal voltage is converted into a signal corresponding to a corrected amount of tilt by the feedback circuit 204, and is fed back to the subtracting circuit 202. As a result, when the detected amount of tilt and the corrected amount of tilt match, an output of the subtracting circuit 202 becomes zero and the correction signal voltage also becomes zero. It is not essential to provide the AGC circuit 201 and the AGC circuit 201 may be omitted.

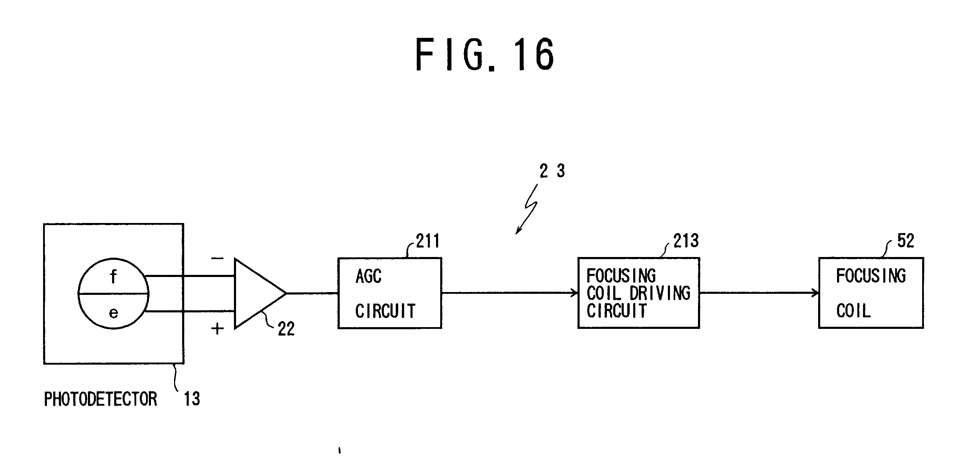

FIG.16 is a system block diagram showing the construction of the circuit 23 for a case where the amount of tilt is corrected by tilting the objective lens 6 (focus control system). In FIG.16, the circuit 23 includes an AGC circuit 211, and a focusing coil driving circuit 213. The difference between the outputs of the detector parts e and f of the 2-part photodetector 13 is obtained by the differential amplifier 22, and the output of the differential amplifier 22 is supplied to the focusing coil driving circuit 213 via the AGC circuit 211. The focusing coil driving circuit 213 corrects the amount of tilt by applying to the focusing coil 52 a correction signal current which is proportional to the amount of tilt detected by the differential amplifier 22. It is not essential to provide the AGC circuit 211 and the AGC circuit 211 may be omitted.

It is possible to use a single AGC circuit in common as the AGC circuit 201 shown in FIG.15 and the AGC circuit 211 shown in FIG.16. In addition, the piezoelectric element driving circuit 203 shown in FIG.15 and the focusing coil driving circuit 213 shown in FIG.16 may be realized by a single digital signal processor (DSP) or the like.

Further, the present invention is not limited to these embodiments, but various variations and modifications may be made without departing from the scope of the present invention.

## Claims

1. An optical information storage apparatus characterized by:

   a light source (1) emitting a beam;
   a beam splitter (2), having a first surface on a side of said light source and a second surface on a side opposite to the first side, reflecting the beam from the light source transmitted through the first surface by the second surface to irradiate a recording surface of a recording medium; and
   detection means (11, 11A, 11B) for detecting a surface fluctuation of the recording medium by detecting a beam reflected by the recording surface of the recording medium and transmitted through said beam splitter.

2. The optical information storage apparatus as claimed in claim 1, characterized in that said beam splitter (2) further has a reflecting layer provided on the second surface and having a constant reflectivity regardless of a polarization direction of the beam.

3. The optical information storage apparatus as claimed in claim 1 or 2, characterized in that said beam splitter (2) comprises a semitransparent mirror.

4. The optical information storage apparatus as claimed in any of claims 1 to 3, characterized in that the first and second surfaces of said beam splitter (2) are non-parallel to each other.

5. The optical information storage apparatus as claimed in any of claims 1 to 4, characterized in that the first surface of said beam splitter (2) comprises a polarization beam splitter.

6. The optical information storage apparatus as claimed in any of claims 1 to 5, further characterized by:

a Wollaston prism (17) provided between said beam splitter (2) and said detection means (11, 11A, 11B).

7. The optical information storage apparatus as claimed in claim 6, characterized in that said Wollaston prism (17) separates the beam reflected by the recording surface of the recording medium and transmitted through said beam splitter into three beams, and said Wollaston prism is arranged so that separating directions of the three beams are perpendicular to straight lines along which the beams reflected by the first and second surfaces of said beam splitter (2) form an image on said detection means (11, 11A, 11B).

8. The optical information storage apparatus as claimed in any of claims 1 to 7, further characterized by:

an optical system, including an objective lens (6), irradiating the beam from said light source reflected by said beam splitter (2) and stopped down to a diffraction limit on the recording surface of the recording medium.

9. The optical information storage apparatus as claimed in any of claims 1 to 8, further characterized by:

control means (23, 211, 213) for driving the objective lens (6) based on an output of said detection means (11, 11A, 11B) to control a position of the objective lens.

10. The optical information storage apparatus as claimed in any of claims 1 to 9, which further comprises:

control means (23, 201-204) for driving the recording medium based on an output of said detection means (11, 11A, 11B) to control a surface fluctuation of the recording medium.

FIG.1

# FIG. 2

DIRECTION OF PUSH-PULL

11

13

f

e — 21

12

a b c d

20

# FIG. 3

10

18 : IMAGE FORMATION OF MAIN BEAM

19 : IMAGE FORMATION OF REFLECTED SUB BEAM

# FIG. 4

11 RANGE IN WHICH PHOTODETECTOR 13 MAY BE SET

2b,3

2

4

30

31b

6

2a

A

31

31a

30

31b

Y

X

31

31a

SAGITTAL PLANE CAUSTIC CURVE POSITION (VIEWED IN DIRECTION OF ARROW A)

DETECTOR POSITION

MERIDIONAL PLANE CAUSTIC CURVE POSITION (VIEWED IN DIRECTION OF ARROW A)

α

10

1

SHAPE OF CIRCLE OF CONFUSION OF MAIN BEAM (SAGITTAL DIAGRAM)

EP 0 917 136 A1

# FIG. 5

EP 0 917 136 A1

FIG. 6

FIG. 7

# FIG. 8

EP 0 917 136 A1

# FIG. 9

DIRECTION OF PUSH-PULL

FIG. 10

# FIG. 11

FIG. 12

# FIG. 13

# FIG. 14

# FIG. 15

EP 0 917 136 A1

# FIG. 16

EP 0 917 136 A1

PHOTODETECTOR 13

2 3

211
AGC
CIRCUIT

213
FOCUSING
COIL DRIVING
CIRCUIT

52
FOCUSING
COIL

22

European Patent Office

**EUROPEAN SEARCH REPORT**

Application Number

EP 98 10 8116

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN<br>vol. 016, no. 209 (P-1354), 18 May 1992<br>& JP 04 034738 A (OLYMPUS OPTICAL CO LTD), 5 February 1992,<br>* abstract * | 1-3,9,10 | G11B7/095 |
| A | PATENT ABSTRACTS OF JAPAN<br>vol. 018, no. 184 (P-1719), 29 March 1994<br>& JP 05 342613 A (NIPPON COLUMBIA CO LTD), 24 December 1993,<br>* abstract * | 1,5 | |
| A | PATENT ABSTRACTS OF JAPAN<br>vol. 018, no. 315 (P-1755), 15 June 1994<br>& JP 06 068540 A (SONY CORP), 11 March 1994,<br>* abstract * | 1,6,7 | |
| A | PATENT ABSTRACTS OF JAPAN<br>vol. 097, no. 005, 30 May 1997<br>& JP 09 017016 A (TDK CORP), 17 January 1997,<br>* abstract * | 6,7 | TECHNICAL FIELDS SEARCHED (Int.Cl.6)<br><br>G11B |
| A | "SCHIEFLAGENDETEKTOR FUER OPTISCHE PLATTEN"<br>NEUES AUS DER TECHNIK,<br>no. 1, 15 February 1990,<br>pages 4-5, XP000253991 | 1,4 | |

The present search report has been drawn up for all claims

| Place of search | Date of completion of the search | Examiner |
|---|---|---|
| BERLIN | 28 August 1998 | Bernas, Y |